# EUROPEAN PATENT SPECIFICATION

(11) **EP 0 804 075 B1**
(45) Date of publication and mention of the grant of the patent: **18.06.2003**
(21) Application number: 95936203.9
(22) Date of filing: 01.09.1995
(51) Int. Cl.: A01N 41/10

(54) **HERBICIDAL COMPOSITIONS CONTAINING DMSO**
HERBIZIDE ZUSAMMENSETZUNG ENTHALTEND DMSO
HERBICIDES CONTENANT DU DIMETHYLSULFOXYDE (DMSO)

(30) Priority: 02.09.1994 US 300267; 07.06.1995 US 475987
(43) Date of publication of application: 05.11.1997
(73) Proprietor: Smale, Bernard, Portland, OR 97201 (US)
(72) Inventor: Smale, Bernard, Portland, OR 97201 (US)
(74) Representative: Maschio, Antonio
(86) International application number: PCT/US95/12410
(87) International publication number: WO 96/008148

(56) References cited:
- CA-A- 818 375
- US-A- 3 756 801
- ROBERT L. WEINTRAUB 'DMSO and plants.' Ch. 10 of: 'Dimethyl Sulfoxide, Vol. I, ed.: Stanley W. Jacob' 1971 , DEKKER , NEW YORK cited in the application see page 295 - page 315
- MUSSELL H.W. ET AL: 'Acceleration of bean leaf abscission by 2,4-D applied in DMSO' CAN. J. PLANT SCI. vol. 47, 1967, pages 635 - 639
- V. T. Lapham: 'The effectiveness of some DMSO-herbicide combinations', page 438 - 442 of a publication by the Louisiana Wildlife and Fisheries Commission (1966).

## Description

### Field of the Invention:

This invention is related to means of enhancing effectiveness of selective herbicides by addition of 1%-2.5% Dimethylsulfoxide (DMSO) to the herbicidal composition whilst reducing the amount of herbicide used. In some instances, especially when the target species has stems or leaves that are particularly impermeable, it may be necessary to increase the amount of DMSO to 3%.

### Background of the Invention:

The use of herbicides and pesticides has proven to be a mixed blessing to mankind. While the value of increased production of food for human consumption has been important in meeting the nutritional needs of the world, the addition of large amounts of herbicidal substances which are often slowly degraded has caused environmental damage. The regulation of use of herbicides to avoid excess dispersal of these active agents into the environment has become an increasing concern to agriculturalists and environmentalists.

The use of dimethylsufoxide with herbicides has previously been suggested. A study done in 1964 used DMSO with herbicides in solutions containing 0.5 gpa of DMSO to 1 gpa of a mixture containing picloram-2,4-D mixture. Using this large amount of DMSO proved to result in efficacious killing of plants. However, the use of such large amounts of DMSO (33%) in herbicidal compositions has not been practiced, and would undoubtedly be too expensive for widespread use. Furthermore, as indicated in this specification, such concentrations are neither necessary nor advisable.

DMSO has also been used in insecticidal compositions. U.S. Patent 3,321,364 discloses use of DMSO with the insecticide for use in compositions containing ryania. The DMSO is in very small amount and appears to be used primarily as a solubilizing agent.

Keil, of the U.S. Department of Agriculture has suggested use of bacteriocidal and fungicidal compositions containing oxytetracycline and .25% to .5% DMSO. No use of DMSO in herbicidal compositions is taught therein. Keil suggested that the increased effectiveness was apparently due to the increased absorption and translocation of the active agents.

Robert L. Weintraub has studied the effect of DMSO on plants. He found that aqueous solutions containing 40% or greater amounts of DMSO on cacao seedling caused marginal necroses. It was reported that addition of .05% to 15% DMSO to various nutritional supplements such as salts, nutrients, metabolites and dyes resulted in increased absorption.

It has also been reported e.g. in US 3,756,801 that use of 10% to 100% DMSO as a solvent enhanced penetration of herbicide or other active agents to leaves. It goes without saying that use of 10% to 100% DMSO would be prohibitively expensive for use in agricultural application.

CA 818,375 discloses, that DMSO may be advantageously added to various herbicides such as dichloropropionic acid and 2,4-D in a preferred ratio of 1 : 10 - 10 : 1 . This document, however, does not disclose, that the application concentration of the herbicide could be lowered to below a concentration that normally is not toxic to the weed to be controlled by incorporation of an amount of 1 - 3% of DMSO. Sulfonylureas and glyphosate are not mentioned in this document either.

It was also reported that use of 1% to 5% DMSO in fungicidal compositions resulted in enhancement of action of some fungicides. No improvement in effect was seen when used with some of the fungicides.

### Description of the Invention:

It is the purpose of this invention to provide improved post-emergent herbicidal compositions containing greatly reduced amounts of herbicide in formulations containing .5 to 2.5% of DMSO. When the target species is particularly impermeable to herbicidal agents, the amount of DMSO in the herbicidal composition may be as high as 3%. A preferred range for DMSO concentration is 1% to 2% DMSO. At the levels of DMSO taught herein, it is possible to avoid damage to the plant absorption process whilst greatly decreasing the amount of herbicide necessary to obtain highly effective selective response.

The method of the invention comprises A method of formulating a post-emergence herbicidal composition comprising the steps of:
a) determining the concentration of an herbicide of interest which is effective for post-emergence application;
b) diluting the herbicide until it is no longer effective for weed control; and
c) formulating a composition for post-emergence application comprising the herbicide of interest at a concentration where it is no longer effective for weed control as determined in step b), and 1-3% DMSO.

The method of the invention may often be practiced by preparing a concentrated composition comprising an herbicide and anhydrous dimethylsulfoxide. Various additives, including detergents, emulsifiers and dispersing agents may be added along with an agriculturally acceptable carrier to provide the desired concentration of active agent for application to plants. In a preferred embodiment, the method of preparation of the composition for application comprises the steps of 1) solubilizing a dry herbicidal composition in anhydrous dimethylsufoxide, 2) adding additional dimethylsufoxide and a surfactant to the composition prepared in step 1, and then 3) adding to the composition prepared in step 1 sufficient agriculturally acceptable carrier to provide a composition containing final composition of 1% to 3% dimethylsulfoxide and a selectively herbicidal amount of a post-emergent herbicide. Anhydrous surfactant may be added to the composition along with the anhydrous dimethylsulfoxide.

The invention further comprises a composition for post-emergence application to target plants comprising a sulfonaurea and DMSO, wherein the DMSO is present at 1-3% and the herbicide is present in a concentration which has been determined, when no DMSO is present, to be ineffective at killing the target plants and a composition for post-emergence application to target plants comprising a glyphosate and DMSO, wherein the DMSO is present at 1-3% and the herbicide is present in a concentration which has been determined, when no DMSO is present, to be ineffective at killing the target plants.

Because DMSO is readily degraded in the natural environment, the addition of DMSO does not present a lingering danger to the ecosystem. The enhancement of the herbicidal activity occasioned by use of DMSO in concentrations taught herein makes it possible to greatly decrease the amount of herbicide that could have more lingering effects when released into the environment. The methods using the preferred amounts disclosed herein will also result in financial savings.

Finally, it is possible to obtain short-term herbicidal effects while decreasing the term of residual soil activity. This reduction is particularly important when using agents such as sulfonylurea herbicides. Most crops planted in fields previously treated with these herbicides are subject to injury if residual soil activity remains after treatment with these herbicides. The rotational intervals for the sulfonyl ureas range from 3-15 months, and may be even longer when the herbicide is applied over other herbicides. The major factors contributing to the soil activity are herbicide use rate, soil pH, moisture, and air and soil temperature. Of these, only the use rate can be readily modified in the field. However, lowering the use rate may limit effectiveness at all time periods following application. By adding DMSO to the carrier as taught herein, it is possible to retain short-term efficacy while lowering the use rate, thus shortening the rotational cycle without loss of short-term efficacy.

It was found that use of about 1% DMSO most frequently resulted in minimal loss of the preferred species of plants while minimizing the amount of active herbicide needed to obtain desired results against the weed population. Use of up to 3% DMSO is acceptable and provides improved effectiveness in a few instances. However, when more that 3% DMSO was present in the compositions, the young crop plants were more likely to be damaged. Moreover, unnecessary cost was incurred by the addition of unnecessarily high levels of DMSO without any increase in benefit. By methods of the invention it has been possible to decrease amount of herbicide in the compositions by 50% to 75% without loss of short term herbicidal activity.

### Example 1:

Phytotoxicity of DMSO sprays was evaluated on hosta, ferns and azaleas. In each instance, groups of 6 plants were sprayed with 1%, 2%, 5% or 10% aqueous DMSO.

**Table 1:**

| Plants | Concentration DMSO | Effects |
|---|---|---|
| hosta | 10% | Margina burn |
| ferns | 10% | burn on fron tips |
| azalea | 10% | non-toxic |
| hosta | 5% | non-toxic |
| ferns | 5% | burn on fron tips |
| azalea | 5% | non-toxic |
| hosta | 2% | non-toxic |
| ferns | 2% | non-toxic |
| azalea | 2% | non-toxic |

At 1% DMSO on all tests, no toxicity was noted.

### Example 2:

A commercial product containing as active agents 2,4 dichlorophenoxy acetic acid and 2-(2-methyl-4-chlorophenoxy) propionic acid (Composition A) was evaluated. The recommended rate of application is 4 teaspoons per gallon. Lower rates of 1 and 2 teaspoons per gallon with DMSO added to provide DMSO concentration of 1%, 0.5% and 0.25% were tested. All plants were sprayed to thoroughly wet the leaves with the following results:

**Table 2:**

| Conc. Comp. A | Conc. DMSO | Plantain | Thistle | Ground Ivy | Curly dock |
|---|---|---|---|---|---|
| 4 tsp/gal | 0 | ++ | ++ | ++ | ++ |
| 2 tsp/gal | 0 | + | ± | ± | ± |
| 1 tsp/gal | 0 | -- | -- | -- | -- |
| 4 tsp/gal | 1% | ++++ | ++++ | ++++ | ++++ |
| 2 tsp/gal | 1% | ++++ | ++++ | ++++ | ++++ |
| 1 tsp/gal | 1% | ++ | ++ | ++ | ++ |

| | | | | | |
|---|---|---|---|---|---|
| Definitions: -- = no effect on plants | | | | | |
| + = slight effect | | | | | |
| ± = slight to no effect | | | | | |
| ++ = moderate effect **** = severe damage to plant | | | | | |

Retesting showed similar effects with more

### Example 3:

Glyphosate (N-(phosphonomethyl)glycine), the active agent (41%) in Composition B and other similar nonselective herbicidal products for control of many annual and perennial grasses, broadleaf weeds, woody shrubs and trees was evaluated in greenhouse studies. The LD₅₀ range for glyphosate in the commercial concentrate Composition B on sickle pod grown in the greenhouse was established at 0.06%, and 0.03%. Comparisons of percent control of sickle pod by glyphosate with and without DMSO (3%) showed significant improvement in sickle pod control at 0.06% and 0.03% when 3% DMSO was present over control when DMSO was lacking.

Evaluation of effect of the 0.06% glyphosate concentrate over a 30 day interval clearly demonstrated improved early and sustained control of sickle pod with compositions containing 3% DMSO. Data showing effectiveness for control of sickle pod at concentration 0.06% and 0.3% in carrier with 3% DMSO are shown below. The testing procedure used 12 sickle pod 3 inches high selected for uniformity in each treatment. The rating of injury to each plant was based on visual rating of herbicidal activity with +=10%, ++=25%, +++=50%, ++++-75% and dead plants =100%.

| % herbicide and additive | % control of sickle pod at 12 days |
|---|---|
| 0.06% glyphosate only | 51% |
| 0.06% glyphosate with 3% DMSO | 90% |
| 0.03% glyphosate only | 54% |
| 0.03% glyphosate with 3% DMSO | 85% |

Evaluation of the 0.06% glyphosate concentration over a 30 day interval clearly established improved early and sustained control of sickle pod with 3% DMSO compared with control using the glyphosate only.

| | 12 days | 20 days | 30 days |
|---|---|---|---|
| 0.06% glyphosate only | 51% | 43% | 85% |
| 0.06% glyphosate, 3% DMSO | 90% | 85% | 96% |

### Example 4:

Two sulfonyl urea herbicides were tested. A 75% by weight of (((((4,6-dimethoxy pyrimidin-2-yl)aminocarbonyl))aminosulfonyl))-N,N-dimethyl-3-pyridine carboxamide (Composition C) and a composition containing as an active agent 25% ethyl 2-[[[[(4-chloro-6-methoxy-2-pyrimidin-2-yl)-amino] carbonyl] amino]sulfonyl] benzoate, also known as chlorimuron ethyl, (Composition D) which provide selective weed control of may grasses and broad leaf weeds in crops such as peanuts, alfalfa, soybean, rice, cereal grains and cotton, were tested. Use rates of sulfonyl urea herbicides such as Composition C and Composition D are low, ranging from 1/4 to 1 1/2 ounces per acre.

Green house experiments were conducted demonstrating the sustained efficacy of Composition C and Composition D at one-half the rate suggested on the label. Composition C label directions for control of annual morning glory (2-3 inches height) call for use of 2/3 ounces per acre. Composition D labels stipulates the same amount for control of annual morning glory and sickle pod. Data show no loss of effectiveness with these active agents when the rate of application was reduced to 1/3 ounce per acre. Increased herbicidal activity with Composition C plus DMSO at 0.66 ounces per acre and 0.33 ounces per acre applications was shown.

| Product and concentration | % control, 9 days | morning glory 21 days |
|---|---|---|
| C at 0.66 oz/A | 33% | 52% |
| C at 0.66 oz/A, 2% DMSO | 52% | 67% |
| C at 0.33 oz/A, 2% DMSO | 55% | 65% |

| | % control, | sickle pod |
|---|---|---|
| D at 0.66 oz/A | 57.5% | 85% |
| D at 0.66 oz/A, 2% DMSO | 77.5% | 95% |
| D at 0.33 oz/A, 2% DMSO | 75% | 90% |

| Product and concentration | % control, 9 days | morning glory 21 days |
|---|---|---|
| D at 0.66 oz/A | 75% | 75% |
| D at 0.66 oz/A, 2% DMSO | 82.5% | 80% |
| D at 0.33 oz/A, 2% DMSO | 85% | 92.5% |

Compositions of selective and nonselective post emergence herbicides are prepared using 25% to 50% of the recommended amount of the following in carrier containing 1%-2.5% DMSO carrier are prepared in the same manner using other herbicides including atrazine (6-chloro-N-ethyl-N'-(1-methylethyl)1,3,5-triazine-2,4-diamine), chlorsulfuron (2-chloro-N-[[(4-methoxy-6-methyl-1,3,5-triazin-2-yl)-amino]carbonyl] benzenesulfonamide), linuron (N'-(3,4-dichlorophenyl)-N-methoxy-N-methylurea), chlorimuron ethyl (ethyl 2-[[[[(4-chloro-6-methoxypyrimidin-2-yl) -amino]-carbonyl]amino]sulfonyl]benzoate), dalapon (2,2-dichloropropanic acid), MCPA (4-chloro-2-methylphenoxy acetic acid), diquat (6,7-dihydrodipyrido[1,2-a:2',1'-c]pyrazinediium dibromide), 2,4 D (2,4 dichlorophenoxy acetic acid), propanil (N-(3,4-dichloropheny) propanamide), alachlor (2-chloro-N-(2,6-diethylphenyl-N-methoxymethyl)-acetamide), fluometuron (N,N-dimethyl-N'-[3-(trifluoromethyl)pheny]urea), chloramben (3-amino-2,5-dichlorobenzoic acid), fluazifop butyl (2-[4-[[5-(trifluoromethyl)-2-pyridinyl]oxy]phyenoxy]propanoic acid butyl ester), amitrole (1H-1,2,4-triazol-3-amine), bentazon (3-(1-methylethyl)-1H-2,1,3-benzothadiazin-4(3H) -one 2,2 dioxide), paraquat (1,1'-diemthyl-4,4'-bipyridinium), diclofop methyl (2-[4-(2,4-dochlorophenoxy-)-phenoxy]propanoic acid methyl ester), terbutryn, tebuthiuron (1-(5-tert-butyl-1,3,4-thiadiazol-2-yl)-1,3-diemthylurea), thiobencarb, sethoxydim (2-[1-ethoxyimino)butyl]-5-[2-(ethoxythio)propyl]-3-hydroxy-2-cyclohexen-1-one), dicamba (3,6-dichloro-2-methoxybenzoic acid), pendimethalin (N--(1-ethylpropyl)-3,4-dimethyl-2,6-dinitrobenzenamine), and so forth useful for practice of the invention.

### Example 5:

While smaller amounts of DMSO are useful, glyphosate is most effective when the DMSO content is 2.5% to 3% of the final composition. Based on LD₅₀ herbicidal activity range for glyphosate on sickle pod under 6 inches tall, field sprays for control should be prepared as follows: Mix 2.4 quarts anhydrous DMSO, 2 pints a concentrate of 41% glyphosate and 1.5 pints of a commercial surfactant containing oxylated octal phenol prepared by reacting isooctylphenol with ethylene oxide was added to 14 gallons of water in a spray tank with agitator running. Concentrations of DMSO + the surfactant in finished spray will be 3% and 2% respectively, and concentration of glyphosate will be 1/2 the recommended rate for 3 inch sickle pod (0.625%). The 20 gallon finish spray is sufficient for on acre.

### Example 6:

Composition C, 0.33 oz (1/2 the label rate for control of 1-3 inch morning glory) is dissolved in 1 quart of anhydrous DMSO. An additional 1 3/4 gallons anhydrous DMSO is added with mixing. The DMSO/Composition C concentrate is added to 1 quart of the surfactant, which is then added to 100 gallons of water in a spray tank with agitator running and apply to 1 acre. Concentration in the final product of surfactant and DMSO in finished spray are .25% and 2% respectively.

### Example 7:

0.66 oz Composition D (1/2 the label rate for control of 1-3 inch morning glory) is dissolved in 1 quart of anhydrous DMSO. An additional 1 3/4 gallons anhydrous DMSO is added with mixing. The DMSO/Composition D concentrate and 1 quart of surfactant are added to 100 gallons of water in a spray tank with agitator running and apply to 1 acre. Concentration in the final product of surfactant and DMSO in finished spray are .25% and 2% respectively.

### Example 8:

0.66 oz of Composition D (1/2 the label rate for control of 1-3 inch morning glory) is dissolved in 1 quart of anhydrous DMSO. An additional 1 3/4 gallons anhydrous DMSO is added with mixing. The DMSO/Composition D concentrate and 1 quart of surfactant are added to 100 gallons of water in a spray tank with agitator running and apply to 1 acre. Concentration in the final product of surfactant and DMSO in finished spray are .25% and 2% respectively.

An added advantage provided by use of DMSO in formulations is that the liquid formulations are more stable than other liquid formulations. At the present time, many herbicides must be formulated from dry products close to the time for application. The concentrates containing DMSO and herbicide showed no change of pH or lowering of activity when tested after two months. The ability to formulate the herbicidal compositions by solubilizing with DMSO for later use eases the preparation of the final composition for use near the site of use. Hence, the method of formulation using DMSO taught herein provides a means of producing liquid compositions having increased stability.

In making the dilute compositions for administration to the plants, various detergents,. emulsifiers and dispersing agents are used. Use of α-[4-(1,1,3,3,-tetramethylbutyl)phenyl]-hydroxypoly(oxy-1,2,ethyanediyl also known as octoxynol is exemplified. However, other emulsifiers, detergents and dispersing agents known in the art can be used in accord with the teachings of the art.

It may also be appropriate to add other pesticides, including insecticides and fungicides, to the compositions of the invention.

## Claims

1. A method of formulating a post-emergence herbicidal composition comprising the steps of:
a) determining the concentration of an herbicide of interest which is effective for post-emergence application;
b) diluting the herbicide until it is no longer effective for weed control; and
c) formulating a composition for post-emergence application comprising the herbicide of interest at a concentration where it is no longer effective for weed control as determined in step b), and 1-3% DMSO.

2. A method according to claim 1 wherein the composition of step c) comprises the herbicide at a concentration of 50% or less of the amount found, in step a), to be effective.

3. A method according to claim 1 or claim 2, wherein step b) comprises preparing a series of preparations of decreasing concentration of the herbicide of interest.

4. A method according to any preceding claim wherein an herbicidal spray containing a phenoxy herbicide is formulated.

5. A method according to any one of claims 1 to 3 wherein an herbicidal spray containing a sulfonylurea is formulated.

6. A method according to any one of claims 1 to 3 wherein an herbicidal spray containing glyphosate is formulated.

7. Use of DMSO in the formulation of a composition for post-emergence application to target plants, wherein said composition comprises an herbicide at a concentration which is ineffective at killing the target plants and DMSO at a concentration of 1-3%.

8. Use according to claim 7 wherein an herbicidal spray containing a phenoxy herbicide is formulated.

9. Use according to claim 7 wherein an herbicidal spray containing a sulfonylurea is formulated.

10. Use according to claim 7 wherein an herbicidal spray containing glyphosate is formulated.

11. A composition for post-emergence application to target plants comprising a sulfonylurea and DMSO, wherein the DMSO is present at 1-3% and the herbicide is present in a concentration which has been determined, when no DMSO is present, to be ineffective at killing the target plants:

12. A composition for post-emergence application to target plants comprising a glyphosate and DMSO, wherein the DMSO is present at 1-3% and the herbicide is present in a concentration which has been determined, when no DMSO is present, to be ineffective at killing the target plants.

## Patentansprüche

1. Verfahren zur Zubereitung einer nach dem Herauswachsen herbiziden Zusammensetzung mit den Stufen, in denen man
a) die Konzentration eines interessierenden Herbizids, welches für Anwendung nach dem Herauswachsen wirksam ist, bestimmt,
b) das Herbizid verdünnt, bis es nicht mehr für Unkrautvertilgung wirksam ist, und
c) eine Zusammensetzung für Anwendung nach dem Herauswachsen zubereitet, die das interessierende Herbizid in einer Konzentration, in der es, wie in Stufe b) bestimmt, nicht mehr für Unkrautvertilgung wirksam ist, und 1 bis 3 % DMSO umfaßt.

2. Verfahren nach Anspruch 1, bei dem die Zusammensetzung der Stufe c) das Herbizid in einer Konzentration von 50 % oder weniger der Menge umfaßt, die in Stufe a) als wirksam gefunden wurde.

3. Verfahren nach Anspruch 1 oder 2, bei dem die Stufe b) einschließt, daß man eine Reihe von Präparaten abnehmender Konzentration des interessierenden Herbizids herstellt.

4. Verfahren nach einem der vorausgehenden Ansprüche, bei dem eine herbizide Sprühflüssigkeit bereitet wird, die ein Phenoxyherbizid enthält.

5. Verfahren nach einem der Ansprüche 1 bis 3, bei dem eine herbizide Sprühflüssigkeit bereitet wird, die einen Sulfonylharnstoff enthält.

6. Verfahren nach einem der Ansprüche 1 bis 3, bei dem eine herbizide Sprühflüssigkeit bereitet wird, die Glyphosat enthält.

7. Verwendung von DMSO bei der Zubereitung einer Zusammensetzung für die Anwendung bei Zielpflanzen nach dem Herauswachsen, wobei die Zusammensetzung ein Herbizid in einer Konzentration, die zum Abtöten der Zielpflanzen unwirksam ist, sowie DMSO einer Konzentration von 1 bis 3 % umfaßt.

8. Verwendung nach Anspruch 7, bei der eine herbizide Sprühflüssigkeit bereitet wird, die ein Phenoxyherbizid enthält.

9. Verwendung nach Anspruch 7, bei der eine herbizide Sprühflüssigkeit bereitet wird, die einen Sulfonylharnstoff enthält.

10. Verwendung nach Anspruch 7, bei der eine herbizide Sprühflüssigkeit bereitet wird, die Glyphosat enthält.

11. Zusammensetzung zur Aufbringung auf Zielpflanzen nach deren Herauswachsen mit einem Gehalt an Sulfonylhamstoff und DMSO, worin das DMSO in einer Menge von 1 bis3 % vorliegt und das Herbizid in einer Konzentration vorliegt, welche als unwirksam beim Abtöten der Zielpflanzen, wenn kein DMSO vorliegt, bestimmt wurde.

12. Zusammensetzung zur Aufbringung auf Zielpflanzen nach deren Herauswachsen, die ein Glyphosat und DMSO umfaßt, wobei das DMSO in einer Menge von 1 bis 3 % vorliegt und das Herbizid in einer Konzentration vorhanden ist, welche als unwirksam zum Abtöten der Zielpflanzen bestimmt wurde, wenn kein DMSO vorliegt.

## Revendications

1. Procédé pour formuler une composition herbicide de post-levée, comprenant les étapes consistant :
a) à déterminer la concentration d'un herbicide intéressant qui est efficace pour une application en post-levée ;
b) à diluer l'herbicide jusqu'à ce qu'il ne soit plus efficace pour lutter contre des mauvaises herbes ; et
c) à formuler une composition pour l'application en post-levée comprenant l'herbicide intéressant à une concentration à laquelle il n'est plus efficace pour la destruction des mauvaises herbes de la manière déterminée dans l'étape b), et 1 à 3 % de DMSO.

2. Procédé suivant la revendication 1, dans lequel la composition de l'étape c) comprend l'herbicide à une concentration égale ou inférieure à 50 % de la quantité trouvée dans l'étape a) en tant que quantité efficace.

3. Procédé suivant la revendication 1 ou la revendication 2, dans lequel l'étape b) comprend la préparation d'une série de préparations de concentrations décroissantes de l'herbicide intéressant.

4. Procédé suivant l'une quelconque des revendications précédentes, dans lequel une composition herbicide d'atomisation contenant un herbicide à fonction phénoxy est formulée.

5. Procédé suivant l'une quelconque des revendications 1 à 3, dans lequel une composition herbicide d'atomisation contenant une sulfonylurée est formulée.

6. Procédé suivant l'une quelconque des revendications 1 à 3, dans lequel une composition herbicide d'atomisation contenant du glyphosate est formulée.

7. Utilisation de DMSO dans la formulation d'une composition pour l'application en post-levée à des plantes cibles, dans laquelle ladite composition comprend un herbicide à une concentration qui est inefficace pour tuer les plantes cibles et du DMSO à une concentration de 1 à 3 %.

8. Utilisation suivant la revendication 7, dans laquelle une composition herbicide d'atomisation contenant un herbicide à fonction phénoxy est formulée.

9. Utilisation suivant la revendication 7, dans laquelle une composition herbicide d'atomisation contenant une sulfonylurée est formulée.

10. Utilisation suivant la revendication 7, dans laquelle une composition herbicide d'atomisation contenant du glyphosate est formulée.

11. Composition pour l'application en post-levée à des plantes cibles, comprenant une sulfonylurée et du DMSO, dans laquelle le DMSO est présent en une proportion de 1 à 3 % et l'herbicide est présent à une concentration qui a été déterminée, lorsqu'aucune quantité de DMSO n'est présente, en tant que concentration inefficace pour tuer les plantes cibles.

12. Composition pour l'application en post-levée à des plantes cibles, comprenant un glyphosate et du DMSO, dans laquelle le DMSO est présent en une proportion de 1 à 3 % et l'herbicide est présent à une concentration qui a été déterminée, lorsqu'aucune quantité de DMSO n'est présente, en tant que concentration inefficace pour tuer les plantes cibles.
